# EUROPEAN PATENT APPLICATION

(11) **EP 3 050 920 A1**
(43) Date of publication of application: **03.08.2016**
(21) Application number: 14849501.3
(22) Date of filing: 26.09.2014
(51) Int. Cl.: C08L 23/06, C08L 23/16, E04B 1/64, E04D 5/06

(54) **IMPERMEABILISING SHEET OF EPDM**

(30) Priority: 26.09.2013 ES 201331400
(71) Applicant: Luis Compte, Miguel, 08017 Barcelona (ES)
(72) Inventor: Luis Compte, Miguel, 08017 Barcelona (ES)
(74) Representative: Pons
(86) International application number: PCT/ES2014/070728
(87) International publication number: WO 2015/044492

(57) **Abstract**

The invention relates to an impermeabilising sheet formed by calcium carbonate, paraffin elastomer and plastic polyolefin among other components, and to the method for the application thereof to surfaces, comprising overlapping of said sheets and hot air soldering..

## Description

The present invention relates to a waterproofing membrane composed of calcium carbonate, paraffinic elastomer and plastic polyolefin, amongst other components, and to a process for the surface application thereof, which comprises overlapping of these membranes and hot-air welding.

### PRIOR ART

The degradation of outdoor surfaces or those in contact with aggressive liquids over time is inevitable due to the composition of the materials. Replacing the entire parts entails considerable cost and effort; for this reason, it is necessary to apply partial solutions at the break point.

One commonly used technique is the application of asphalt fabric at the break point. This is an economical, easy-to-use option, but, due to the characteristics of the possible asphalt fabrics, it is quite vulnerable to degradation by environmental agents.

Another common technique is the PVC roofing system, but it entails a higher cost and a more complicated application process.

### DESCRIPTION OF THE INVENTION

The present invention relates to a modified thermoplastic rubber membrane (preferably ethylene-propylene) that has very good mechanical properties and excellent weathering resistance, and, thanks to its thermoplastic nature, is capable of being hot-air welded. Due to its composition, it presents high tear resistance, puncture resistance and an elongation capacity greater than 450%. These characteristics make it an ideal product for the waterproofing of roofs, dams, reservoirs, channels, landfills, water purifying plants, etc.

The components of the membrane of the invention make it possible to obtain a product with the same mechanical characteristics as a traditional vulcanised EPDM material, but without the need to use the vulcanisation process. For this reason, the resulting membrane may be hot-air welded.

The first aspect of the present invention relates to a waterproofing membrane that comprises:
- calcium carbonate,
- paraffinic elastomer,
- plastic polyolefin,
- pigment and
- liquid paraffin plasticiser.

In a preferred embodiment, the membrane of the invention comprises:
- 30%-40% calcium carbonate by weight,
- 40%-55% paraffinic elastomer by weight,
- 5%-12% plastic polyolefin by weight,
- 1%-6% pigment by weight and
- 1%-6% liquid paraffin plasticiser by weight.

The following are suitable elastomers for the membranes of the invention: IR (polyisoprene); BR (polybutadiene); SBR (butadiene-styrene copolymer); ABS (acrylonitrile-butadiene-styrene copolymer); Nitrile (butadiene-acrylonitrile copolymer); Butyl (isobutylene-isoprene copolymer);* EPR (ethylene-propylene copolymer); EPDM (copolymer of ethylene, propylene and a diene, such as hexadiene, dicyclopentadiene or ethylidene-norbornene); Copolymer of ethylene and an alpha-olefin containing 3 to 12 carbon atoms; Terpolymer of ethylene, an alpha-olefin containing 3 to 12 carbon atoms and a diene (preferably unconjugated); Neoprene (polychloroprene); Silicone (polydimethylsiloxane); Ethylene-vinyltrimethoxysilane copolymer; Copolymers of ethylene and one or more of acrylonitrile, maleic acid esters, vinyl acetate, acrylic and methacrylic acid esters, and similar compounds; Butadiene-isoprene copolymers; Styrenebutadiene-isoprene terpolymers; Chlorobutyl (chlorinated isobutylene-isoprene copolymer); Bromobutyl (brominated isobutylene-isoprene copolymer); Brominated isobutylene-para-methylstyrene copolymer.

In another preferred embodiment, the paraffinic elastomer is an ethylene-propylene copolymer and, more preferably, EPDM.

Suitable plastic polyolefins for the present invention include high-density polyethylenes (HDPEs), low-density polyethylenes (LDPEs) and polypropylenes (PEs). In a preferred embodiment, the polyolefin is a low-density polyethylene.

The membrane of the invention may also incorporate pigments in order to colour and/or confer opacity to the mixture. These pigments may be any of those habitually used in the sector, although the pigment incorporated into the membrane of the invention is preferably carbon black.

The plasticisers used in the invention include petroleum oils, such as aromatic, naphthenic and paraffin oils according to the ASTM D2226 standard; polyalkylbenzene oils; organic acid monoesters, such as alkyl and alkoxyalkyl oleates and stearates; organic acid diesters, such as dialkyl, dialkoxyalkyl and alkyl-aryl phthalates, terephthalates, sebacates, adipates and glutarates; glycol diesters, such as tri-, tetra- and polyethylene-glycol dialkanoates; trialkyl trimellitates; trialkyl, trialkoxyalkyl, alkyl-diaryl and triaryl phosphates; chlorinated paraffin oils; coumarone-indene resins; pine tars, vegetable oils, such castor oils and esters, wood, turnip and soy pulp subproducts, and esters and the epoxidised derivatives thereof; and similar compounds.

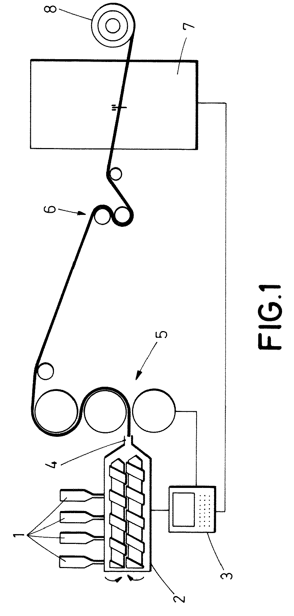

Another aspect of the invention relates to a process for waterproofing a surface, which comprises overlapping the membranes of the invention described above, as shown in Figure 1, on the surface to be repaired and applying hot air in order to weld them.

Another aspect of the invention is the use of the waterproofing membranes described above to repair breakages or cracks on any surface, preferably roofs.

Another aspect of the invention relates to a process for obtaining the membranes of the invention.

Mixing of the components of the membrane described above is performed in a double-worm extrusion press. This extrusion press is equipped with an area designed for the dosing of the raw materials and an area designed for the incorporation of the liquid plasticisers. Subsequently it also has a general plastification area, where the mixture is prepared and delivered to the flat outlet spinning nozzle that shapes the mass until it becomes a membrane with a thickness slightly greater than the desired final thickness.

The system where this process is performed is represented in Figure 1, and comprises a device for adding (1) the raw materials described above, which carries the raw materials to a double-worm extrusion press (2) containing a flat nozzle tip (4) at the outlet, designed to shape the already extruded raw material as a membrane. The outlet of the double-worm extrusion press (2) has a calender (5) that bends the membranes and a driving pawl (6) placed prior to a cutting device (7) connected to a winding device (8), where the membranes are finally rolled. The double-worm extrusion press (2), the calender (5) and the cutting device (7) are controlled by means of a control panel (3).

Each of the areas of the extrusion press is equipped with an independent electric heating system equipped with control probes connected to a set of automata, which make it possible to specify the ideal temperature profile to obtain a homogeneous mass at the necessary temperature for it to behave properly at the nozzle tip.

The membranes thus shaped proceed to the calendering area, where the desired final thickness is obtained by means of three rollers with a diameter not less than 55 cm, conveniently refrigerated with water. These rollers are equipped with a refrigeration circuit that allows for the internal circulation of water at a low temperature and the sufficient flow rate to refrigerate the mass originating from the extrusion press, as a function of the membrane thickness, the machine velocity and the mass and room temperatures.

In order to obtain a regular finish, the three rollers in the calendering system must be perfectly aligned and synchronised in order to obtain a regular thickness along the entire width of the membrane.

Finally, the already shaped membrane proceeds to the rolling section, where it is rolled around a cardboard support and shaped into rolls, packaged and prepared to be delivered to the work site.

Throughout the description and the claims, the word "comprises" and variants thereof are not intended to exclude other technical characteristics, additives, components or steps. For persons skilled in the art, other objects, advantages and characteristics of the invention will arise, partly from the description and partly from the practice of the invention. The following examples and figures are provided for illustrative purposes, and are not intended to limit the scope of the present invention.

### DESCRIPTION OF THE FIGURES

**Fig. 1****.** Shows the process for manufacturing the membranes of the invention.

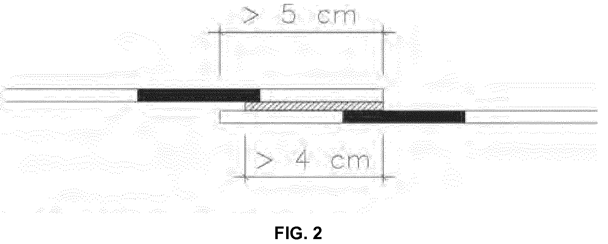

**Fig. 2****.** Details of the welding of the membranes of the invention.

### EXAMPLES

Below we will illustrate the invention by means of assays performed by the inventors, which demonstrate the effectiveness of the product of the invention.

### Example 1: Assays to determine the dimensional stability of the waterproofing membrane of the invention.

Assay method according to the UNE EN 1107-2:2001 standard.
- Equipment used: MEMMERT stove.
- Assay temperature: 80°C ± 2°C.
- Storage duration at the assay temperature: 6 h ± 15 min.
- Test piece dimensions: square, approximately 250 x 250 mm, uniformly obtained along the entire width of the membrane, to a limit greater than 100 mm from the edge.
- No. of test pieces: 3.

**Table 1: Expression of the dimensional variation, expressed as a (%) of the respective initial dimension, (+) or (-), in each direction.**

| **Dimensional variation (%)** | | |
|---|---|---|
| **Test piece no.** | **Longitudinal direction** | **Transverse direction** |
| 1 | -1.0 | -0.5 |
| 2 | -0.9 | -0.9 |
| 3 | -0.8 | -0.3 |
| Mean value | -0.9 | -0.6 |
| Expanded uncertainty U | ± 0.07% | ± 0.07% |

### Example 2: Assays to determine the watertightness of the waterproofing membrane of the invention.

Assay method according to the UNE EN 1928:2000 Method A standard.
- Equipment used: pressure device with orifices, for watertightness.
- Water pressure applied: 10 kPa.
- Assay temperature: 23°C ± 2°C.
- Duration of the assay: 24 ± 1 hours.
- Test piece dimensions: circular, with a diameter of 200 + 2 mm, uniformly obtained along the entire width of the membrane, to a limit greater than 100 mm from the edge.
- No. of test pieces: 3.

**Table 2: Results of the watertightness assay.**

| **Test piece no.** | **Result** |
|---|---|
| 1 | Watertight |
| 2 | Watertight |
| 3 | Watertight |

The membrane is considered to be watertight when all the test pieces pass the assay, i.e. none of the test pieces assayed show evidence of water penetration that produce changes in the filter.

### Example 3: Artificial ageing assays, by means of prolonged exposure to a combination of UV radiation, high temperature and water, of the waterproofing membrane of the invention.

Assay method according to the UNE EN 1297:2006 standard.
- Equipment used: fluorescent UV lamp source (ATLAS) Type I (UVA 340 nm).
- Normalised black panel temperature during irradiation: 60°C ± 3°C.
- Temperature during the darkness and atomisation period: 25°C ± 5°C.
- Cycle: 300 min of irradiation (dry period) and 60 min without irradiation and atomisation.
- Side exposed: outer side of the membrane.
- Duration of the assay: 1000 h.
- Assay test pieces: test pieces with a sufficient size to perform the following assays: visual evaluation, identifying the outer side of the membrane, as well as its direction.
- Expression of the results: visual observation, evaluation of the formation of crevices or cracks by means of a 10x magnifying glass. The evaluation was Degree 0: no crevices or cracks were observed.

### Example 4: Peel resistance assays on the overlap of the waterproofing membrane of the invention.

Assay method according to the UNE EN 12316-2:2001 standard.
- Equipment used: traction machine (Instron dynamometer), with a constant jaw displacement value.
- Jaw displacement velocity: 100 ± 1 mm/min.
- Initial distance between the jaws: 100 ± 5 mm.
- Assay temperature: 23 ± 2°C.
- Assay test pieces: rectangular type, 50 ± 1 mm x 300 mm, obtained perpendicular to the joint.
- No. of test pieces: 5.
- Expression of the results: mean peel resistance, mean value of the peel strength values, taken from the central area.

**Table 3: Results of the peel resistance assay.**

| **Test piece no.** | **Mean traction force (N/50 mm)** | **Type of failure** |
|---|---|---|
| 1 | 87 | Peeling-off of joint |
| 2 | 95 | Peeling-off of joint |
| 3 | 93 | Peeling-off of joint |
| 4 | 71 | Peeling-off of joint |
| 5 | 68 | Peeling-off of joint |
| Mean value | 83 | |

### Example 5: Assays to determine the shear resistance of the welding joint of the waterproofing membrane of the invention.

Assay method according to the UNE EN 12317-2:2000 standard.
- Equipment used: traction machine (Instron dynamometer), with a constant jaw displacement value.
- Jaw displacement velocity: 100 ± 1 mm/min.
- Initial distance between the jaws: 200 ± 5 mm.
- Assay temperature: 23°C ± 2°C.
- Assay test pieces: rectangular type, 50 ± 1 mm x 300 mm, obtained perpendicular to the joint.
- No. of test pieces: 5 from the joint prepared in the longitudinal direction, and 5 from the joint prepared in the transverse direction.
- Expression of the results: maximum traction force, expressed in N/50 mm, and type of failure.

**Table 4: Results of the weld shear resistance assay.**

| **Test piece no.** | **Mean traction force (N/50 mm)** | **Type of failure** |
|---|---|---|
| 1 | 257 | Breakage of the membrane at the edge of the weld |
| 2 | 234 | Breakage of the membrane at the edge of the weld |
| 3 | 316 | Breakage of the membrane at the edge of the weld |
| 4 | 295 | Breakage of the membrane at the edge of the weld |
| 5 | 295 | Breakage of the membrane at the edge of the weld |
| Mean value | 279 | |

### Example 6: Installation of the waterproofing membrane of the invention.

Prior to placing the membrane, an anti-puncture layer of a non-woven geotextile fabric was applied. Whenever possible, the membranes must be placed perpendicular to the maximum gradient direction, starting from the lowest point thereof (drainage or sink area). The subsequent membranes are arranged by working upwards, until the highest point is reached, such that each new membrane layer overlaps the preceding one on top; the overlaps are therefore located in the direction of the gradient.

The joints between the membranes were created by means of hot-air thermoplastic welding, and those areas that required a second application of hot air were retouched. Following the welding, the joint was pressed down using a rubber roller, in order to ensure a homogeneous joint along the entire welding.

Once the joints were prepared, they were physically controlled by passing a blunt metallic needle or a screwdriver along the edge of the joint.

## Claims

1. Waterproofing membrane that comprises:
- calcium carbonate,
- paraffinic elastomer,
- plastic polyolefin,
- pigment and
- liquid paraffin plasticiser.

2. Membrane according to claim 1, comprising:
- 30%-40% calcium carbonate by weight,
- 40%-55% paraffinic elastomer by weight,
- 5%-12% plastic polyolefin by weight,
- 1%-6% pigment by weight and
- 1%-6% liquid paraffin plasticiser by weight.

3. Membrane according to any of the preceding claims, wherein the paraffinic elastomer is an ethylene-propylene copolymer.

4. Membrane according to any of the preceding claims, wherein the polyolefin is a low-density polyethylene.

5. Membrane according to any of the preceding claims, wherein the pigment is carbon black.

6. Surface waterproofing process, which comprises placing the membranes according to any of the preceding claims overlapped with one another and applying hot air to weld them.

7. Use of the membrane according to any of claims 1 to 5, to repair cracks or breakages on different surfaces.

8. Use according to the preceding claim, wherein the surface is a roof.
